# EUROPÄISCHE PATENTANMELDUNG

(11) **EP 0 997 373 A1**
(43) Veröffentlichungstag der Anmeldung: **03.05.2000**
(21) Anmeldenummer: 99203562.6
(22) Anmeldetag: 29.10.1999
(51) Int. Cl.: B62J 1/08, B62K 5/00

(54) **Vorrichtung zum Einstellen einer Sitzstelle in ein Fahrzeug**

(30) Priorität: 30.10.1998 NL 1010435
(71) Anmelder: Van Ee, Teunis Karel, 3771 MB Barneveld (NL)
(72) Erfinder: Van Ee, Teunis Karel, 3771 MB Barneveld (NL)
(74) Vertreter: De Hoop, Eric

(57) **Zusammenfassung**

Die Erfindung bezieht sich auf eine Vorrichtung für das Einstellen eines Autositzes in ein Fahrzeug, insbesondere ein Tretauto, entlang einer Führung.

Gemäß der Erfindung sind hierbei Mittel vorhanden, um den Sitz stufenlos einzustellen, durch die Vorrichtung vertikal auf die Führung festzuklemmen.

## Beschreibung

Die Erfindung bezieht sich auf eine Vorrichtung für das Einstellen einer Sitzstelle in ein Fahrzeug, insbesondere ein Tretauto, entlang einer Führung.

Es ist bekannt, um zum Beispiel einen Autositz schrittweise zu verstellen, und auch bei Tretautos ist es üblich um einen Sitz schrittweise entlang einer Führung einzustellen. So ist es zum Beispiel möglich um den Sitz mit einem Stift durch ein Loch in der Führung festzusetzen, wobei in der Führung auf regelmäßige Abstände Löcher angeordnet sind, um den Sitz abhängig von der Länge des Benutzers einzustellen.

Ein Nachteil dieser bekannten Sitzeinstellung, ist daß der Abstand zwischen den Pedalen und dem Lenkrad des Tretautos einerseits und dem Sitz anderseits nicht genau an die Länge des Benutzers angepasst werden kann. Eine derartige genaue Einstellung ist jedoch gerade für Kinder wichtig.

Ein anderes Nachteil ist daß diese bekannte Einstellung des Sitzes schwierig sein kann, besonders für Kinder. Um Ausfallen des Stiftes zu verhüten muß der Stift gesichert sein. Daneben kann der Stift durch häufigen Gebrauch beschädigen. Das Einstellen des Sitzes wird vor allem für junge Kinder dann sehr schwierig, wenn nicht unmöglich.

Es ist ein Ziel der Erfindung eine Vorrichtung für das Einstellen einer Sitzstelle in ein Fahrzeug, insbesondere ein Tretauto, zu verschaffen, die genau auf die Länge des Benutzers abzustellen ist.

Es ist ein anderes Ziel der Erfindung eine Vorrichtung für das Einstellen einer Sitzstelle in ein Fahrzeug zu verschaffen, die leicht bedient werden kann und sicher ist, speziell für junge Kinder.

Es ist noch ein anderes Ziel der Erfindung eine Vorrichtung für das Einstellen einer Sitzstelle in ein Fahrzeug zu verschaffen, die leicht und billig herzustellen ist, und zuverlässig fixiert.

Ein oder mehrere dieser Ziele werden erreicht mit einer Vorrichtung für das Einstellen einer Sitzstelle in ein Fahrzeug, insbesondere ein Tretauto, entlang einer Führung, wobei Mittel vorhanden sind, um den Sitz stufenlos einzustellen, durch die Vorrichtung manuell vertikal auf die Führung festzuklemmen.

Durch den Sitz stufenlos einstellbar auf die Führung festzuklemmen, ist der Sitz an jeder Stelle auf die Führung festzusetzen, so daß die Einstellung genau an die Länge des Benutzers angepasst werden kann. Durch die Vorrichtung durch Festklemmen auf die Führung festzusetzen, ist die Einstellung besonders geeignet zu machen für Gebrauch durch junge Kinder.

Übrigens ist es aus US-A-5,509,678 bekannt, um einen Sitz stufenlos auf einen Liege- und oder Sitzrad zu montieren mittels zwei Klemmblöcke die eine Führung horizontal zwischen sich klemmen. Die zwei Klemmblöcke werden dabei mittels einer Ausfallnabe zu einander gezogen. Hierbei können Kinderfinger zwischen den Klemmblöcken und dem Gerüst geraten. Daneben ist die Befestigung weniger torsionstabil: bei seitwärtser Belastung können die Klemmblöcke sich von der Führung lösen. Daneben sind spezielle Flansche oder Kastenprofile nötig.

Vorzugsweise umfaßt die Vorrichtung Führungsmittel um die Vorrichtung entlang der Führung zu schieben. Hierdurch ist die Vorrichtung mit dem Sitz leicht zu der neu gewünschten Stelle zu bringen.

Gemäß einer Vorzugsausfuhrung sind die Führungsmittel mit Hilfe von Festklemmitteln auf die Führung festzuklemmen. Hierdurch werden die Führungsmittel auch für das Festklemmen der Vorrichtung auf die Führung benutzt.

Vorzugsweise ist die Führung eine Schiene, und umfassen die Führungsmittel zwei Führungsplatten, an beiden Seiten der Schiene, die entlang der Schiene zu verschieben sind und die auf die Schiene festzuklemmen sind. Hiermit ist eine einfache Führung und Festklemmung gegeben.

Vorzugsweise ist die Schiene mit einem Flansch versehen, an beiden Seiten wovon die zwei Führungsplatten angeordnet sind. Hierdurch können die Führungsplatten leicht auf die Schiene festgeklemmt werden, während auch eine gute Führung für die Führungsplatten gegeben ist.

Vorzugsweise sind die Festklemmittel einstellbar zwischen einem Führungsstand worin die Führungsplatten entlang der Schiene verschiebbar sind, und einem Festklemmstand worin die Führungsplatten auf der Schiene festgeklemmt sind. Durch die Festklemmittel zwischen diesen Standen einstellbar zu machen, ist die Vorrichtung leicht zu bedienen und kann die Vorrichtung nicht unabsichtlich von der Führung abgenommen werden.

Gemäß einer Vorzugsausführung ist ein erstes Teil der Festklemmittel an der ersten Führungsplatte befestigt und ein zweites Teil der Festklemmittel hinsichtlich der ersten Festklemmittel einstellbar, wobei die zweite Führungsplatte durch das zweite Teil der Festklemmittel mitgenommen wird. Durch das zweite Teil der Festklemmittel zu verstellen, wird die zweite Führungsplatte hinsichtlich der ersten Führungsplatte bewogen, hinwärts um den Flansch zwischen die Platten zu klemmen, oder abwärts um die Platten entlang dem Flansch schieben zu können.

Vorzugsweise umfassen die Festklemmittel zum Beispiel einen Bolzen und eine Mutter, wobei der Bolzen oder die Mutter an der ersten Führungsplatte befestigt ist, und wobei die Mutter oder der Bolzen drehbar ist, um die Führungsplatten in den Führungsstand oder Festklemmstand zu setzen.

Vorzugsweise ist die Schiene ein Kastenprofil das an einer Seite, vorzugsweise der Unter- oder Oberseite, spezifisch der Oberseite, offen ist, derartig daß zwei zu einander gekehrte Flansche gebildet sind, wobei die Führungsplatten verschiebbar sind entlang und festzuklemmen sind auf den beiden Flanschen. Hierdurch kann eine der Führungsplatten im Kastenprofil aufgenommen werden und die andere Führungsplatte außerhalb des Kastenprofils bleiben, wobei der Bolzen vorzugsweise zwischen den Flanschen durch geht, so daß die Vorrichtung nicht von der Schiene zu entfernen ist. Hierdurch ist die Konstruktion einfach, sicher und starr.

Gemäß einer Vorzugsausführung ist ein erstes Befestigungsmittel, zum Beispiel ein Bolzen, an der ersten Führungsplatte im Kastenprofil befestigt, und ist am zweiten Teil des Befestigungsmittels, zum Beispiel einer Mutter, einen Handgriff befestigt, um die Mutter entlang dem Bolzen zu drehen. Mit Hilfe des Handgriffs sind die Festklemmittel in der Form des Bolzens und der Mutter von dem Führungsstand zum Festklemmstand und umgekehrt verstellbar.

Vorzugsweise ist auf der zweiten Führungsplatte außerhalb des Kastenprofils einen ersten Anschlag für den Handgriff vorhanden, um die Mutter bis eine bestimmte Festklemmung der Führungsplatten anzudrehen. Durch diesen ersten Anschlag wird die Mutter in dem Festklemmstand immer bis eine maximale Festklemmkraft angedreht werden. Diese Festklemmkraft kann dann derartig gewählt werden, daß auch kleine Kinder den Handgriff bis den Führungsstand zurückdrehen können.

Vorzugsweise ist auch auf der zweiten Führungsplatte einen zweiten Anschlag vorhanden, um die Mutter bis einen bestimmten Stand loszudrehen, worin die Vorrichtung entlang der Schiene verschiebbar ist. Wenn der Handgriff bis den zweiten Anschlag zurückgedreht ist, befinden der Bolzen und die Mutter sich in dem Führungsstand. Durch den zweiten Anschlag wird die Mutter nicht unabsichtlich viel weiter als nötig losgedreht, oder sogar vom Bolzen abgedreht, wodurch der Bolzen mit dem Handgriff verloren gehen könnte.

Gemäß einer Vorzugsausführung ist das Kastenprofil an der Oberseite offen, und ist auf der Führungsplatte außerhalb des Kastenprofils ein Befestigungsprofil für Befestigung des Sitzes angeordnet. Hiermit kann der Sitz auf sehr einfache Weise an den Führungs- und Festklemmitteln befestigt sein.

Vorzugsweise dient hierbei das Befestigungsprofil als erster und/oder zweiter Anschlag. Separate Anschläge sind hierdurch nicht nötig, was die Vorrichtung einfach macht.

Gemäß einer Vorzugsausführung sind die Führungsplatten länglich und auf Abstand von den Festklemmitteln mittels einer Befestigung mit einem Zwischenabstand der etwas größer ist als die Dicke der Flansche an einander befestigt. Hierdurch sind die Führungsplatten an einer Stelle durch die (feste) Befestigung und an einer anderen Stelle durch die (einstellbare) Festklemmittel an einander befestigt.

Vorzugsweise besteht die Befestigung aus einem Stift, der zwischen den beiden Flanschen des Kastenprofils verschiebbar ist. Hierdurch ist eine einfache Geradführung verschafft, wobei der Sitz nicht hinsichtlich der Schiene verdrehen kann.

Die Erfindung wird hierunter an Hand von einem Ausführungsbeispiel, unter Bezug auf die zugefügte Zeichnung, erläutert werden.
Figur 1 zeigt auf schematische Weise eine Vorrichtung gemäß der Erfindung in perspektivischer Ansicht, wobei ein dazugehöriges Kastenprofil teilweise wiedergegeben ist.
Figur 2 zeigt Figur 1 in Endansicht.

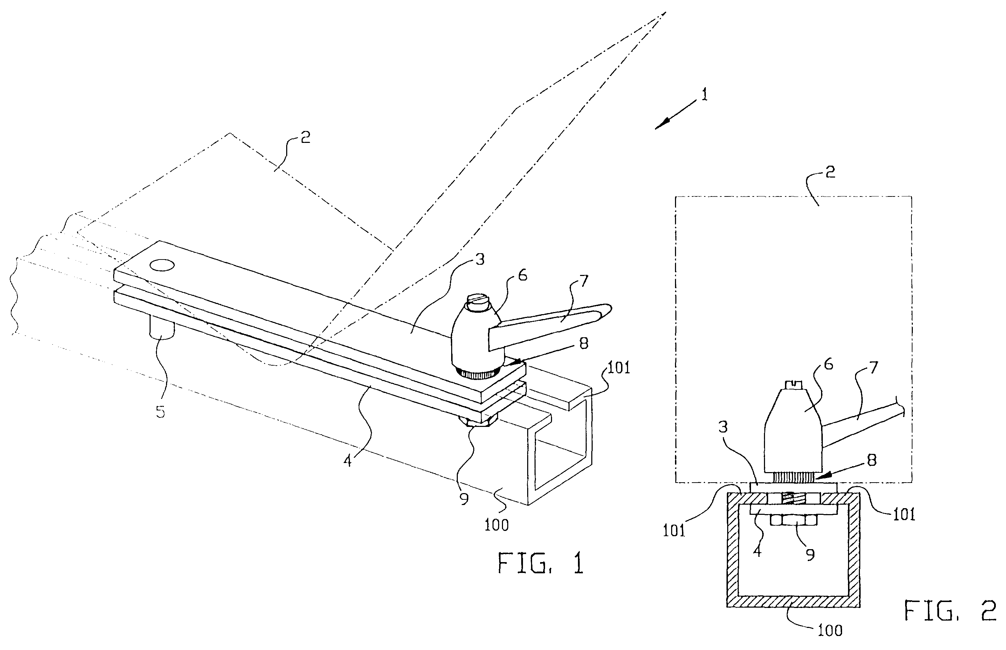

Figur 1 zeigt ein Ausführungsbeispiel von der Vorrichtung gemäß der Erfindung in perspektivischer Ansicht. Die Vorrichtung ist verschiebbar auf einer Schiene 100 zu befestigen in der Form eines an der Oberseite offenen Kastenprofils mit zu einander gerichteten Flanschen 101.

Die Vorrichtung 1 besteht aus einem Befestigungsprofil 2, woran ein Sitz für ein Tretauto befestigt werden kann. Das Befestigungsprofil 2 ist auf einer obersten Führungsplatte 3 befestigt, welche oberste Führungsplatte 3 mittels eines Stiftes 5 mit einer untersten Führungsplatte 4 verbunden ist. Der Stift 5 ist an der Vorderseite der Führungsplatten 3 und 4 durch zum Beispiel Schweißen an diesen Platten befestigt, wobei die Führungsplatten 3, 4 einen Zwischenabstand haben, der etwas größer ist als die Dicke der Flansche 101.

An der Hinterseite der Führungsplatten 3, 4 sind Festklemmittel in der Form eines Bolzens 9 und einer Mutter 8 vorhanden. Der Bolzen 9 ist zum Beispiel an der untersten Führungsplatte 4 geschweißt und steckt durch die oberste Führungsplatte nach oben aus. Auf dem Bolzen 9 ist eine Mutter 8 verschraubt. Diese Mutter 8 ist im Gehäuse 6 eines Handgriffs aufgenommen, so daß die Mutter 8 durch das Verdrehen eines Griffs 7 am Handgriff 6 verdreht werden kann.

Die Arbeitsweise der Vorrichtung 1 gemäß der Erfindung ist wie folgt. Wenn der (nicht gezeigte) Sitz des Tretautos verstellt werden muß, wird die Mutter 8 hinsichtlich des festen Bolzens 9 losgedreht. Dazu wird der Handgriff 6 mittels des Griffs 7 gegen den Uhrzeigersinn verdreht. Dadurch daß die Mutter 8 losgedreht ist, bekommen die Führungsplatten 3 und 4 mehr Raum und können sie an Ort und Stelle der Festklemmittel 8, 9 entlang der Schiene 100 verschieben.

Wenn der Sitz durch das Verschieben auf die richtige Stelle gebracht ist, wird der Griff 7 im Uhrzeigersinn verdreht, so daß die Mutter 8 auf den Bolzen 9 verschraubt wird. Hierdurch wird die oberste Führungsplatte 3 zu der untersten Führungsplatte 4 gezwungen, so daß die Flansche 101 zwischen den Führungsplatten 3 und 4 geklemmt werden. Die Vorrichtung 1 ist hierdurch auf der Schiene 100 festgesetzt und kann nicht mehr verschieben.

Durch den Bolzen 9 und die Mutter 8 mit einer geeigneten Schraubensteigung zu wählen, kann dafür gesorgt werden, daß der Bolzen und die Mutter durch eine Verdrehung von gut einer halben Umdrehung zwischen dem Festklemmstand und dem Führungsstand zu verstellen sind. Wenn jetzt der Griff 7 sowohl bei dem Festdrehen wie auch bei dem Losdrehen einen Anschlag gegen die Hinterseite des Befestigungsprofils 2 findet, wird die Vorrichtung immer mit einereinfachen Verdrehung des Griffs 7 von ihrem Klemmstand zu ihrem Führungsstand und vice versa gebracht werden können. Zugleich sorgt der Anschlag des Griffs 7 gegen die Hinterseite des Befestigungsprofils 2 bei dem Andrehen dafür, daß die Mutter 8 nicht zu straff auf den Bolzen 9 festgedreht wird, so daß ältere Kinder die Vorrichtung nicht so straff auf die Schiene 100 festklemmen können, daß diese nicht mehr von jungen Kindern getrennt werden kann.

Die Vorrichtung 1 gemäß der Erfindung verschafft also eine einfach zu bedienende Einstellmöglichkeit für den Sitz eines Tretautos und derartige, der stufenlos verstellbar ist um den Abstand zwischen dem Sitz und den Pedalen des Tretautos nach Wunsch einstellen zu können. Diese Vorrichtung ist einfach und robust und kann auch von jungen Kindern bedient werden.

Die Erfindung beschränkt sich nicht auf oben umschriebenes Ausführungsbeispiel; der Schutzumfang wird durch die hiernach folgenden Ansprüche bestimmt.

## Patentansprüche

1. Vorrichtung für das Einstellen einer Sitzstelle in ein Fahrzeug, insbesondere ein Tretauto, entlang einer Führung, wobei Mittel vorhanden sind um den Sitz stufenlos einzustellen, durch die Vorrichtung manuell vertikal auf die Führung festzuklemmen.

2. Vorrichtung gemäß Anspruch 1, wobei die Vorrichtung Führungsmittel umfaßt um die Vorrichtung entlang der Führung zu verschieben.

3. Vorrichtung gemäß Anspruch 2, wobei die Führungsmittel mit Hilfe von Festklemmitteln auf die Führung festzuklemmen sind.

4. Vorrichtung gemäß Anspruch 2 oder 3, wobei die Führung eine Schiene ist, und wobei die Führungsmittel zwei Führungsplatten umfassen, an beiden Seiten der Schiene, die entlang der Schiene verschiebbar sind und die auf die Schiene festzuklemmen sind.

5. Vorrichtung gemäß einem der vorhergehenden Ansprüche, wobei die Schiene mit einem Flansch versehen ist, an beiden Seiten wovon die zwei Führungsplatten angeordnet sind.

6. Vorrichtung gemäß einem oder mehreren der vorhergehenden Ansprüche, wobei die Festklemmittel zwischen einem Führungsstand, worin die Führungsplatten entlang der Schiene verschiebbar sind, und einem Festklemmstand, worin die Führungsplatten auf der Schiene festgeklemmt sind, einstellbar sind.

7. Vorrichtung gemäß Anspruch 6, wobei ein erstes Teil der Festklemmittel an einer ersten Führungsplatte befestigt ist und ein zweites Teil der Festklemmittel hinsichtlich der ersten Festklemmittel einstellbar ist, wobei die zweite Führungsplatte durch das zweite Teil der Festklemmittel mitgenommen wird.

8. Vorrichtung gemäß Anspruch 7, wobei die Festklemmittel einen Bolzen und eine Mutter umfassen, wobei der Bolzen oder die Mutter an der ersten Führungsplatte befestigt ist, und wobei die Mutter oder der Bolzen drehbar ist, um die Führungsplatten in den Führungsstand oder den Festklemmstand zu setzen.

9. Vorrichtung gemäß einem oder mehreren dervorhergehenden Ansprüche, wobei die Schiene ein Kastenprofil ist, das an der Ober- oder Unterseite offen ist, derartig daß zwei zu einander gekehrte Flansche gebildet sind, wobei die Führungsplatten verschiebbar sind entlang und festzuklemmen sind auf den beiden Flanschen.

10. Vorrichtung gemäß Anspruch 9, wobei der Bolzen an der ersten Führungsplatte im Kastenprofil befestigt ist, und wobei an der Mutter einen Handgriff befestigt ist, um die Mutter entlang dem Bolzen zu drehen.

11. Vorrichtung gemäß Anspruch 10, wobei auf der zweiten Führungsplatte außerhalb des Kastenprofils einen ersten Anschlag für den Handgriff vorhanden ist, um die Mutter bis eine bestimmte Festklemmung der Führungsplatten anzudrehen.

12. Vorrichtung gemäß Anspruch 11, wobei auf der zweiten Führungsplatte einen zweiten Anschlag vorhanden ist, um die Mutter bis einen bestimmten Stand loszudrehen, worin die Vorrichtung entlang der Schiene verschiebbar ist.

13. Vorrichtung gemäß einem der Ansprüche 9 - 12, wobei das Kastenprofil an der Oberseite offen ist, und wobei auf der Führungsplatte außerhalb des Kastenprofils ein Befestigungsprofil für Befestigung des Sitzes angeordnet ist.

14. Vorrichtung gemäß Anspruch 13 in Kombination mit Anspruch 12, wobei das Befestigungsprofil als erster und/oder zweiter Anschlag dient.

15. Vorrichtung gemäß einem der Ansprüche 9- 14, wobei die Führungsplatten länglich sind und auf Abstand von den Festklemmitteln mittels einer Befestigung mit einem Zwischenabstand, der etwas größer ist als die Dicke der Flansche, an einander befestigt sind.

16. Vorrichtung gemäß Anspruch 15, wobei die Befestigung aus einem Stift, der zwischen den beiden Flanschen des Kastenprofils verschiebbar ist, besteht.
